## Europäisches Patentamt
## European Patent Office
## Office européen des brevets

(11) Publication number: **0 180 716**
**B1**

(12) **EUROPEAN PATENT SPECIFICATION**

(45) Date of publication of patent specification: **19.04.89**

(21) Application number: **85108743.7**

(22) Date of filing: **12.07.85**

(51) Int. Cl.⁴: **C 08 L 7/00,** C 08 L 53/02 // (C08L7/00, 53:02, 9:06),(C08L53/02, 7:00, 9:06)

(54) Rubber compositions comprising mixtures of rubber and synthetic polymers.

(30) Priority: **09.10.84 US 658966**

(43) Date of publication of application:
**14.05.86 Bulletin 86/20**

(45) Publication of the grant of the patent:
**19.04.89 Bulletin 89/16**

(84) Designated Contracting States:
**DE FR GB IT LU**

(56) References cited:
**BE-A- 657 207**
**FR-A-1 569 131**
**GB-A-1 412 807**
**US-A-3 265 765**

**CHEMICAL ABSTRACTS, vol. 77, no. 13, 25th September 1972, page 71, no. 89791u, Columbus, Ohio, US; & JP - A - 71 39 476 (ASAHI CHEMICAL INDUSTRY CO., LTD.) 20-11-1971**

(73) Proprietor: **THE FIRESTONE TIRE & RUBBER COMPANY**
**1200 Firestone Parkway**
**Akron, Ohio 44317 (US)**

(72) Inventor: **Hamed, Gary R.**
**584 Sturgeon Drive**
**Akron Ohio 44319 (US)**

(74) Representative: **Kraus, Walter, Dr. et al**
**Patentanwälte Kraus, Weisert & Partner**
**Thomas-Wimmer-Ring 15**
**D-8000 München 22 (DE)**

Courier Press, Leamington Spa, England.

**Description**

The invention relates to rubber compositions containing mixtures of synthetic polymer and natural rubber. More particularly, it relates to compositions containing a minor proportion of natural rubber (NR) in combination with a triblock synthetic rubbery polymer and, optionally, another synthetic rubbery polymer. It also relates to components for building rubber articles, such as tires, comprising these compositions as well as articles built from them.

Components used to build rubber articles such as tires must have sufficient green strength to prevent tearing and excessive sagging during building operations and to aid in dimensional stability of the uncured article. In addition, such green strength helps prevent tire cord movement during subsequent processing steps such as molding and curing. To satisfy these requirements, components such as tire body plies usually contain greater than 50% NR. Synthetic rubbery polymers such as random styrene butadiene rubbers (SBR) are generally deficient in these green strength properties and cannot be used without preliminary special treatment, such as irradiation and cement coatings, in article building operations. While such techniques are usually satisfactory, in certain instances it would be advantageous to avoid them and at the same time reduce the amount of NR required to provide satisfactory building component properties. In other words, it would be desirable to reduce or eliminate the NR content of such components and substitute therefor synthetic materials such as SBR to obtain components, such as tire body plies, having low NR content and, at the same time, high green strength properties comparable to those of plies currently in commercial use (which contain large amounts, such as up to 100%, NR). In addition, such synthetic rubber components should exhibit processing and cured physical properties required for their use.

SBR and triblock SBS (styrene-butadiene-styrene) synthetic rubbery polymers, as well as various blends of them with each other and with other types of polymers and/or NR, are known. See, for example, US—A—3,424,649 and 3,793,283 which disclose blends of SBS with certain polyolefin elastomers other than SBR. US—A—3,299,174 relates to blends of polypropylene with SBS. Other U.S. Patents disclosing similar blends include US—A—3,572,721, 3,689,595, 3,830,767 and 3,850,474.

US—A—4,343,918 and 4,340, 684 both relate to thermoplastic elastomers comprising blends of crystalline 1—olefin polymers, SBR and highly saturated elastomers.

US—A—3,798,190 discloses compositions of high green strength comprising blends of SBR and hydrogenated random styrene-butadiene copolymers and, optionally, NR. US—A—4,254,013 discloses the combination of unsaturated acid monomers in polymers with NR and synthetic cis-1,4-polyisoprene rubber to allow the formation of ionic crosslinks. Even in these mixtures high (50—90%) proportions of NR were found necessary to give satisfactory green strength.

Other techniques for improving the green strength of rubber components made from substantial amounts of synthetic rubber are known, such as irradiation with ionizing irradiation and the application of cement coatings to enhance building tack.

US—A—3,265,765 describes compositions having improved processability and green strength comprising a major proportion of an elastomeric homopolymer or random copolymer and 5—50% by weight of a block polymer. Further improvements in both processability and green strength are achieved by the combination of an elastomeric polymer of conjugated dienes having a high cis 1,4-content and 5—30% by weight each of a block polymer having a specific composition and of a polymerized conjugated diene having a cis 1,4 content of 88—100% but of a relatively low average molecular weight in the order of 2,000-50,000.

GB—A—1,412,807 describes a bead protection strip for a pneumatic tyre made of a vulcanised rubber composition including both fibres and styrene-butadiene-styrene block polymer and a pneumatic tyre including such bead protection strips.

The above described state of the art, however, when taken individually or in any combination does not render obvious, much less anticipate, the present invention.

Blends of synthetic rubbery polymers such as SBR and SBS, with low amounts of NR, having sufficient green strength, and cured performance properties to allow them to be used in high performance rubber articles such as tires, have not heretofore been available. Therefore, the object of this invention is to provide rubber compositions made from low proportions of NR and high amounts of synthetic rubbers, such as SBR and SBS, having sufficient green strength to allow their use in fabricating rubber articles without the required intervention of irradiation and cement coating techniques.

According to the present invention, there is provided a rubber composition comprising 20—40 percent by weight natural rubber (NR) in admixture with 10—50 percent by weight triblock first synthetic rubbery polymer comprising vinyl aromatic and conjugated diene blocks wherein the vinyl aromatic region constitutes the end blocks and 15—35 percent by weight second synthetic rubbery polymer.

In addition, the invention includes tire body stocks comprised of a minor amount of NR in admixture with a triblock first synthetic rubber, a second synthetic rubber, and other ingredients conventionlly incorporated in such stocks. Radial tires the body of which is composed of such inventive stocks and optionally additional elements such as reinforcing cords, fabrics, webs sheets, and wires are also within the scope of the invention as claimed.

The rubber compositions of the present invention contain a minor proportion of NR. Typically, the NR

2

is a commercially available natural rubber, usually, Heava which is comprised principally of isoprene polymer. NR obtained from other natural sources, such as the guayule plant, as well as synthetic "natural" rubber, comprised of Cis-1, 4-polyisoprene can also be used in place of or in combination with the commercial available Heava. Typically, the inventive compositions contain 20—40-weight percent NR (all percentages, parts and amounts set forth in this specification and the appended claims are by weight unless specifically indicated to the contrary). Typically, commercial grades of NR are used in the invention, particularly those that have been found useful in fabrication of tires and other built rubber articles, but other grades of NR can be used if convenience, economy or availability so indicate. The invention is not dependent on the use of a particular grade or source of NR.

The triblock first synthetic rubbery polymers used in the compositions of this invention are typically polymers comprised of vinyl aromatic and conjugated diene blocks, wherein the vinyl aromatic region constitutes the end or outer blocks. Such triblock synthetic rubbers are prepared from a corresponding vinyl aromatic and conjugated diene monomers by techniques known to the art as indicated by the patents noted above. Generally, the first synthetic rubber is derived from vinyl aromatics such as styrene, alpha-methyl styrene and vinyl toluene and a conjugated diene of 4 to 20 carbon atoms such as butadiene, isoprene, 1, 3-pentadiene and chloroprene.

A readily available useful triblock first synthetic rubber is the above-mentioned styrene-butadiene-styrene (SBS) synthetic rubber. Such triblock rubbers are commercially available from, for example, the Shell Chemical Company under the trade name Kraton® and from the Phillips Chemical Company under the trade name Solprene®.

Useful triblock synthetic rubbers have total average molecular weights of 35,000—100,000 (Mn) and the respective blocks have average molecular weights of 7000—20,000 and 20,000—60,000 (as measured by vapor pressure osmometry). The triblock first synthetic polymer helps provide high green strength to the inventive compositions of which it is a component as well as processability, as reflected by softness and low viscosity, particularly when warm, and high toughness when cool. Also blends containing it exhibit less shrinkage after calendering or extrusion. As an additional benefit, SBS containing compositions are also often found to be self-reinforcing and self-crosslinking. Such compositions do not require high loadings of carbon black for satisfactory reinforcement.

The compositions of the present invention contain, in addition to NR and the first synthetic rubber, 15 35 percent by weight of a second synthetic rubbery polymer. Although many types of known synthetic rubbery polymer can be used in these compositions, a readily available and highly satisfactory second synthetic polymer is that prepared from vinyl aromatic and conjugated diene monomers. These monomers can each, or both, be the same, similar to or unrelated to the monomers from which the first synthetic polymer is prepared. Typical monomers include the aforementioned styrene, alpha methyl styrene, vinyl toluene, butadiene, isopropene and chloroprene. Specific typical examples of the second synthetic polymers are random copolymers of styrene and butadiene (SBR) containing 5—30 percent bound styrene, 95—70 percent bound butadiene and having number average molecular weights of 5000—500,000, typically 8000—300,000. Such rubbers are used in the compositions of this invention in amounts constituting 15—35, say 20—30 percent of the composition. Other synthetic rubbery polymers can be advantageously used as the second synthetic rubbery polymer, such as butyl, neoprene, ethylene-propylene, ethylene-propylene-diene monomer and nitrile rubbers. Mixtures of two or more rubbers of the same or different types can be used as the second rubbery polymer.

As noted, conventional rubber compounding ingredients, fillers, preservatives, and adjuvants can be included in the compositions as desired to give the properties required for a particular end use.

Conventional methods, techniques and equipment are used in blending and processing the compositions of the present invention and the results desired and obtained are not generally dependent on the particular methods used. Such methods include use of mixing and compounding equipment such as Brabender and Banbury mixers. The compositions can be further processed by calendering, hot and cold pressing and other procedures conventionally used in the art.

Although the compositions of this invention generally exhibit sufficient building tack to be useful in many applications, it may, in certain instances, be advantageous to increase their tack to higher levels through the use of known tackifying resins in the stock. Many types of such agents are known to the art, such as the aliphatic tackifying agents sold commercially under the name Piccopale®. Proportions and techniques for using such tackifying agents are also known to the art.

Typical stocks embodying the compositions of this invention which are useful for fabricating body plies to be used in construction of radial tires comprise:

3

TABLE A

| Component | Parts |
|---|---|
| NR | 20-40 |
| SBR | 15-35 |
| SBS | 10-50 |
| Carbon Black | 50* |
| Zinc Oxide | 7.5* |
| Stearic Acid | 3.4* |
| Aliphatic and Aromatic Resins | 5-20** |
| Processing Oil (e.g., extenders) | 1-5** |
| Curatives | 2-5 |

*Typical; amounts may be adjusted to provide the desired properties.

**Conventional optional agents used as processing aids, plasticizers, softeners and tackifiers.

Protective agents such as conventional anti-oxidants and anti-ozonants can also be used in typical amounts if desired.

Five rubber compositions were prepared in a Brabender mixer using conventional techniques containing the components and proportions shown in Table I.

TABLE I

| Component/Blend: (parts) | A | B | C | D | E[d] |
|---|---|---|---|---|---|
| NR | 30 | 30 | 30 | 40 | 60 |
| SBS [a] | 10 | 20 | 30 | 10 | [d] |
| SBR [b] | 60 | 50 | 40 | 50 | 20 |
| HAF Carbon Black | 30 | 30 | 30 | 30 | 30 |
| FEF Carbon Black | 20 | 20 | 20 | 20 | 20 |
| Zinc Oxide | 7.5 | 7.5 | 7.5 | 7.5 | 7.5 |
| Stearic Acid | 3.4 | 3.4 | 3.4 | 3.4 | 3.4 |
| Tackifier [c] | 5.2 | 5.2 | 5.2 | 5.2 | 5.2 |
| Process Oil | 5 | 5.1 | 5.1 | 5.1 | 1.1 |

4

Footnotes to Table I:

a  -  A SBS Triblock copolymer (30% styrene) sold by shell under the tradename Kraeton 1102[R].

b  -  A cold emulsion SBR (23.5% bound styrene) sold by Firestone under the designation S 1502.

c  -  An aliphatic petroleum resin sold under the tradename Piccopale 100 [R].

d  -  Control sample, not of invention, containing 24 parts high green strength SBR (HX 567) in place of SBS (that is, a total of 44 parts SBR).

The green strengths of these blends were measured in a strip stress-strain test. Tests were run after milling the samples with no pressing and with hot pressing. The results are shown in Tables II and III, respectively. Test conditions were 26°C, cross head speed = 0.8467cm/s (20.0 in/min), sample width = 1.270 cm (0.500 in), initial sample length = 2.54 cm (1.00 in).

Blends A—D are according to the invention while Blend E, containing high green strength SBR in place of SBS is a control example included for comparative purposes.

## TABLE II (no pressing)

| Blend | Stress, MPa 100% | 300% | 500% | Break | Elongation at Break, % |
|-------|------|------|------|-------|------------|
| A | 0.412 | 0.389 | 0.414 | 0.485 | 1295 |
| B | 0.489 | 0.523 | 0.589 | 0.736 | 1194 |
| C | 0.628 | 0.726 | 0.856 | 1.271 | 1334 |
| D | 0.416 | 0.428 | 0.496 | 0.787 | 1604 |
| E | 0.351 | 0.402 | 0.530 | 1.065 | 1296 |

## TABLE III (hot pressed)

| Blend | Stress, MPa 100% | 300% | 500% | Break | Elongation at Break, % |
|-------|------|------|------|-------|------------------------|
| A | 0.434 | 0.328 | 0.214 | 0.201 | 507 |
| B | 0.530 | 0.482 | 0.454 | 0.329 | 830 |
| C | 0.649 | 0.662 | 0.685 | 0.631 | 1234 |
| D | 0.427 | 0.365 | 0.353 | 0.300 | 1852 |
| E | 0.348 | 0.340 | 0.388 | 0.574 | 1669 |

The results presented in Tables II and III, particularly those of Blends A—D when compared to those of Blend E, demonstrate that rubber compositions embodying the invention exhibit green strengths that are satisfactory for many purposes. Thus, it is clear that there are many advantages in the use of the compositions of the present invention.

**Claims**

1. A rubber composition comprising 20—40 percent by weight natural rubber (NR) in admixture with 10—50 percent by weight triblock first synthetic rubbery polymer comprising vinyl aromatic and conjugated diene blocks wherein the vinyl aromatic region constitutes the end blocks and 15—35 percent by weight second synthetic rubbery polymer.

2. The composition of Claim 1 wherein the vinyl aromatic in the first synthetic polymer is styrene, alpha-methyl styrene, vinyl toluene and mixtures thereof and the conjugated diene is butadiene, isoprosene, chloroprene and mixtures thereof.

3. The composition of Claim 1 or 2 wherein the second synthetic rubbery polymer is a random copolymer of a vinyl aromatic monomer and a conjugated diene monomer.

4. The composition of Claims 1 to 3 wherein the triblock first synthetic polymer is styrene-butadiene-styrene (SBS).

5. The composition of Claim 3 wherein the second synthetic polymer is styrene butadiene rubber (SBR).

6. The composition of Claims 1 to 5 wherein a tackifying resin is present.

7. A tire body stock comprised of the rubber composition of Claims 1 to 6.

8. The tire body stock of Claim 7 wherein the vinyl aromatic monomer is styrene and the conjugated diene monomer is butadiene.

9. A radial tire having a body made of the stock of Claim 7.

**Patentansprüche**

1. Kautschukmasse, dadurch gekennzeichnet, daß sie 20 bis 40 Gew.-% Naturkautschuk (NR) im Gemisch mit 10 bis 50 Gew.-% eines ersten synthetischen Triblock-Kautschuk-polymeren, das vinylaromatische und konjugierte Dien-Blöcke enthält, worin der vinylaromatische Bereich die Endblöcke ausmacht, enthält und 15 bis 35 Gew.-% eines zweiten synthetischen Kautschukpolymeren enthält.

2. Masse nach Anspruch 1, dadurch gekennzeichnet, daß der Vinylaromat im ersten synthetischen Polymeren Styrol, Alphamethylstyrol, Vinyltoluol und deren Mischungen und das konjugierte Dien Butadien, Isopropen, Chloropren und deren Mischungen sind.

3. Masse nach Anspruch 1 oder 2, dadurch gekennzeichnet, daß das zweite synthetische Kautschukpolymere ein random Copolymeres aus einem aromatischen Vinylmonomeren und einem konjugierten Dienmonomeren ist.

4. Masse nach Anspruch 1 bis 3, dadurch gekennzeichnet, daß das erste synthetische Triblock-Polymere Styrol-Butadien-Styrol (SBS) ist.

5. Masse nach Anspruch 3, dadurch gekennzeichnet, daß das zweite synthetische Polymere Styrol-Butadienkautschuk (SBR) ist.

6. Masse nach Anspruch 1 bis 5, dadurch gekennzeichnet, daß sie ein klebrigmachendes Harz enthält.

7. Reifenkörpermaterial, gekennzeichnet durch die Kautschukmasse nach Anspruch 1 bis 6.

8. Reifenkörpermaterial nach Anspruch 7, dadurch gekennzeichnet, daß das vinylaromatische Monomere Styrol und das konjugierte Dienmonomere Butadien ist.

9. Radialreifen, dadurch gekennzeichnet, daß der Körper aus dem Material nach Anspruch 7 hergestellt ist.

**Revendications**

1. Composition de caoutchouc, comprenant 20 à 40% en poids de caoutchouc naturel (CN) en mélange avec 10 à 50% en poids d'un premier polymère synthétique à trois blocs du genre caoutchouc comprenant des blocs vinylaromatiques et un bloc diénique conjugué, la région vinylaromatique constituant les blocs d'extrémité, et 15 à 35% en poids d'un second polymère synthétique du genre caoutchouc.

2. Composition suivant la revendication 1, dans laquelle le monomère vinyl-aromatique dans le premier polymère synthétique est le styrène, l'alpha-méthylstyrène, le vinyltoluène et leurs mélanges et le diène conjugué est le butadiène, l'isoprène, le chloroprène et leurs mélanges.

3. Composition suivant la revendication 1 ou 2, dans laquelle le second polymère synthétique du genre caoutchouc est un copolymère statistique d'un monomère vinyl-aromatique et d'un monomère diénique conjugué.

4. Composition suivant les revendications 1 à 3, dans laquelle le premier polymère synthétique à trois blocs est un polymère styrène-butadiène-styrène (SBS).

5. Composition suivant la revendication 3, dans laquelle le second polymère synthétique est un caoutchouc styrène-butadiène (SBR).

6. Composition suivant les revendications 1 à 5, dans laquelle une résine d'adhésivité est présente.

7. Matière de base pour corps de bandage pneumatique, constituée de la composition de caoutchouc suivant les revendications 1 à 6.

8. Matière de base pour corps de bandage pneumatique suivant la revendication 7, dans laquelle le monomère vinyl-aromatique est le styrène et le monomère diénique conjugué est le butadiène.

9. Bandage pneumatique radial dont le corps est réalisé en la matière de base suivant la revendication 7.

7